# EUROPÄISCHE PATENTSCHRIFT

(11) **EP 2 414 714 B1**
(45) Veröffentlichungstag und Bekanntmachung des Hinweises auf die Patenterteilung: **09.09.2015**
(21) Anmeldenummer: 10709424.5
(22) Anmeldetag: 16.03.2010
(51) Int. Cl.: F16K 31/08

(54) **(LEIM-) VENTIL**
GLUE VALVE
VANNE (À COLLE)

(30) Priorität: 01.04.2009 DE 102009015231
(43) Veröffentlichungstag der Anmeldung: 08.02.2012
(73) Patentinhaber: Focke & Co. (GmbH & Co. KG), 27283 Verden (DE)
(72) Erfinder: NEUDECK, Heiko, 27283 Verden (DE); ROSE, Sylvia, 25451 Quickborn (DE); SCHNAKENBERG, Jan, 27337 Blender (DE); STEGEN, Marc-Daniel, 22043 Hamburg (DE)
(74) Vertreter: Ellberg, Nils
(86) Internationale Anmeldenummer: PCT/EP2010/001631
(87) Internationale Veröffentlichungsnummer: WO 2010/112134

(56) Entgegenhaltungen:
- DE-A1- 3 338 111
- DE-A1- 3 515 848
- DE-A1- 4 013 323
- DE-A1-102007 029 064
- US-A- 4 574 829

## Beschreibung

Die Erfindung betrifft ein Dosierventil für strömende Medien, insbesondere Leimdüse bzw. Leimventil, mit einem Regel- oder Verschlussorgan, welches durch zwei Magneten, insbesondere durch zwei Dauermagneten, verstellbar ist, gemäß dem Oberbegriff des Anspruchs 1, wie es beispielsweise aus DE-A-10 2007 029 064 bekannt ist.

Ein weiteres Ventil ist in einer bevorzugten Ausführung dargestellt und beschrieben in WO 2008/155117. Bei diesem bekannten Ventil wird Leim verarbeitet, nämlich in der Verpackungstechnik zur Übertragung von (kleinen) Leimportionen auf Faltlappen von (Zigaretten-)Packungen. Bei diesem bekannten Ventil wird ein Verschlussorgan, nämlich ein Ventilstößel mit einem kugelförmigen Verschlussorgan am Ende des Ventilstößels, durch Dauermagneten beaufschlagt, nämlich in Schließstellung unter Anlage des Verschlusskopfes an einem Ventilsitz bewegt. In einem Ventilgehäuse sind bei diesem Stand der Technik ein Magnet feststehend und gegenüberliegend ein Magnet vorgesehen, der mit dem Ventilstößel verbunden ist. Diese Betätigungsmagnete sind mit gleichen Polen einander zugekehrt, insbesondere mit den Nordpolen. Dadurch wird ein abstoßendes Magnetfeld erzeugt bzw. auf den Ventilstößel übertragen. Ein taktweise zu betätigender Elektromagnet bewegt den Ventilstößel gegen die Wirkung der Dauermagneten in die Öffnungsstellung des Verschlussorgans.

Der Erfindung liegt die Aufgabe zugrunde, die Betriebssicherheit und die Lebensdauer von Dosierventilen, insbesondere von Leimventilen oder Leimdüsen, zu erhöhen bzw. zu verlängern.

Zur Lösung dieser Aufgabe ist das erfindungsgemäße Ventil gemäß Anspruch 1 dadurch gekennzeichnet, dass die beiden Magneten mindestens teilweise mit einer gegen Einwirkungen des Mediums resistenten, die Magnetkraft nicht beeinträchtigenden und der offenen Seite der Ausnehmung zugewandten Beschichtung oder Abdeckung oder Deckplatte versehen sind und jeder der beiden mindestens im Bereich von Seitenflächen mit einer Haftmasse bzw. einem Kleber versehen und dadurch in der jeweiligen Ausnehmung befestigt ist.

Der Erfindung liegt die Erkenntnis zugrunde, dass die Verarbeitung von aggressiven Medien, insbesondere von (Kalt-)Leim in der Verpackungstechnik, zu einer unerwünschten Veränderung der Magneten führt, wenn diese aufgrund Aufbau und Arbeitsweise des Ventils mit dem Medium in Kontakt kommen. Mindestens diese Kontaktbereiche der Magneten sind erfindungsgemäß geschützt durch eine Abdeckung bzw. Beschichtung mit den vorstehenden Eigenschaften.

Die schützende Abdeckung ist im einfachsten Falle im Bereich einer End- bzw. Stirnfläche des bzw. der Magnete(n) angeordnet. Vorteilhaft ist eine Ausbildung der Abdeckung als auf den Magneten aufgesetzte Kappe oder als kappenförmige Beschichtung, jeweils mit einer Erstreckung auch im Bereich von Seitenflächen des Magneten.

Verschiedene Materialien sind als Schutzabdeckung geeignet, so Kunststoffe, wie Polyester, aber auch Metalle. Besonders geeignet ist Titan mit überraschenden Ergebnissen. Dieses Material ist resistent gegenüber Leim und anderen fließfähigen Medien, hat schwachmagnetische Eigenschaften und verstärkt die Kraftlinien des Magnetfeldes und damit die Rückstellkraft des Magneten.

Die Beschichtung oder Abdeckung ist mittels Kleber (Ein- und Mehrkomponentenkleber) am Magneten befestigt. Darüber hinaus kann die aus Magnet und Beschichtung bzw. Abdeckung/Kappe bestehende Einheit mittels Verankerungsmasse in einer Ausnehmung eines Trägers für den Magneten fixiert sein.

Zum Anbringen der Magneten an einem Magnetträger durch Einführen in eine Ausnehmung des Magnetträgers werden die Magneten mit einer Abdeckung, einer Deckplatte oder einer Schutzschicht versehen, die jeweils resistent gegen strömende Medien sind. Die Magneten werden dann mindestens im Bereich von Seitenflächen mit einer Haftmasse bzw. einem Kleber versehen und die mit dem Kleber und der Abdeckung, Deckplatte oder Schutzschicht versehenden Magneten werden darauf in die Ausnehmung eingeführt.

Weitere Merkmale und Besonderheiten der Erfindung werden nachfolgend anhand von in den Zeichnungen dargestellten Ausführungsbeispielen erläutert. Es zeigt:
- Fig. 1: ein Ventil, insbesondere Leimventil, im Vertikalschnitt,
- Fig. 2: einen Ausschnitt II des Ventils gemäß Fig. 1 in vergrößertem Maßstab,
- Fig. 3: eine Darstellung entsprechend Fig. 2 eines anderen Ausführungsbeispiels,
- Fig. 4: ein drittes Ausführungsbeispiel in einer Darstellung analog Fig. 2, Fig. 3.

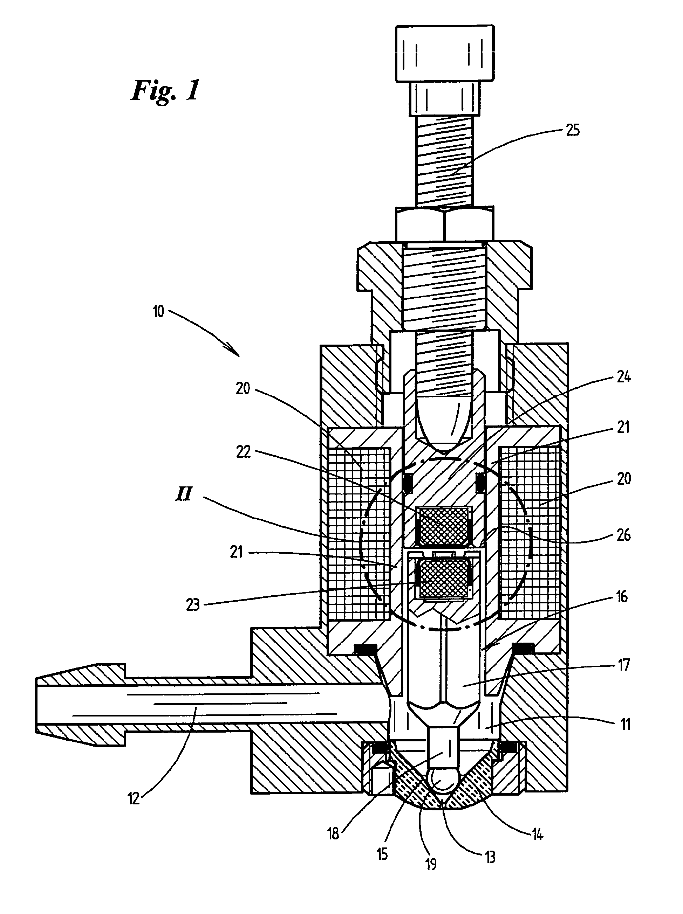

Fig. 1 zeigt ein Beispiel eines bevorzugten Anwendungsbereichs der Erfindung, nämlich eine Leimdüse bzw. ein Leimventil. Mit diesem werden Portionen des strömenden Mediums Leim erzeugt und an Träger abgegeben. Insbesondere dient das Leimventil zur Übertragung von Leimportionen auf Faltlappen von Verpackungen, vorzugsweise bei der Herstellung von Zigarettenpackungen.

Das Ventil besteht aus einem Ventilgehäuse 10 mit einer Ventilkammer 11, der das zu verarbeitende Medium, also insbesondere Leim, zugeführt wird, vorliegend über einen (horizontalen) Leimkanal 12, der in der Ventilkammer 11 mündet.

Das Medium bzw. der Leim tritt aus dem Ventil über eine Ventilöffnung 13 im Bereich eines Ventilsitzes 14 aus. Der Ventilsitz 14 ist mit einer nach unten konvergierenden, konischen Sitzfläche 15 ausgebildet, die zu der mittigen Ventilöffnung 13 führt. Dieser ist ein Verschlussorgan 16 zugeordnet, welches innerhalb des Ventilgehäuses 10 in Längsrichtung bzw. Vertikalrichtung zwischen Schließstellung (Fig. 1) und Öffnungsstellung bewegbar ist. Das Verschlussorgan besteht aus einem Kolbenstück 17, einem Zwischenstück 18 und einem an diesem angebrachten Schließstück 19. Letzteres ist in der äußeren Form auf den Ventilsitz 14 bzw. die Sitzfläche 15 abgestimmt und vorliegend als Kugel ausgebildet. Die Querabmessung bzw. der Durchmesser des Betätigungsorgans 16, nämlich des Kolbenstücks 17, ist deutlich geringer als die entsprechende Abmessung der Ventilkammer 11. Das Medium in der Ventilkammer 11 umgibt demnach das Kolbenstück 17 und gelangt bis an den Abschluss der Ventilkammer 11.

Zur Betätigung des Verschlussorgans 18, nämlich zur Bewegung in Schließstellung und Öffnungsstellung, sind voneinander unabhängige Betätigungsorgane vorgesehen. Ein erstes Betätigungsorgan dient zur Verstellung des Verschlussorgans 16 in Öffnungsstellung, gemäß Fig. 1 in aufwärtsgerichteter Bewegung. Es handelt sich dabei um einen Elektromagneten 20, dessen Wicklung in einem im Querschnitt U-förmigen Haltestück 21 liegt. Der Elektromagnet 20 ist mittig zum Ventilgehäuse 10 angeordnet und umgibt mit einem (unteren) Teilbereich das stößelartige Verschlussorgan 16. Durch impulsartige Beaufschlagung des Elektromagneten 20 wird das Verschlussorgan 16 und damit das Schließstück 19 in eine Öffnungsstellung bewegt.

Die Schließbewegung des Verschlussorgans 16 wird ebenfalls magnetisch bewirkt, und zwar durch zwei aufeinander abgestimmte Einzelmagnete 22, 23. Diese sind vorzugsweise als Dauermagnete ausgebildet. Ein erster Einzelmagnet 22 ist feststehend im Ventilgehäuse 10 positioniert, nämlich in einem die Ventilkammer 11 gegenüberliegend zum Ventilsitz 14 begrenzenden Tragstück 24. Dieses ist vorzugsweise zylindrisch ausgebildet und in einem teilweise vom Elektromagneten 20 umschlossenen Bereich feststehend, jedoch für die Veränderung der Begrenzung der Ventilkammer 11 verstellbar gelagert. Zu diesem Zweck ist das Tragstück 24 mit einer von außen bedienbaren Stellschraube 25 verbunden, mit deren Hilfe die Relativstellung des Tragstücks 24 als oberer Anschlag für das Verschlussorgan 16 einstellbar ist. Dieses erhält in der Öffnungsstellung, in Fig. 1 in der oberen Endstellung, Anlage an einer freien Endfläche 26 des Tragstücks 24.

Ein erster (oberer) Einzelmagnet 22 ist in einer Ausnehmung 27 mittig zum Tragstück 24 in bzw. an diesem angebracht. Die Befestigung des Einzelmagneten 22 erfolgt durch ein Haftmedium, insbesondere Kleber 28. Die Ausnehmung 27 ist geringfügig größer bemessen als der Einzelmagnet 22, sodass der Kleber 28 den Einzelmagneten 22 vollständig, mindestens aber im Bereich von Seitenflächen 29 umfasst und mit einer ringsherum laufenden Innenwand der Ausnehmung 27 verbindet.

Der zweite Einzelmagnet 23 ist gegenüberliegend an dem Verschlussorgan 16 angebracht, insbesondere im Bereich einer End- bzw. Stützfläche 30 des Kolbenstücks 17. Auch dieses weist eine Ausnehmung 31 auf, in der der Einzelmagnet 23 verankert ist, durch Kleber 32. Die im Querschnitt vorzugsweise zylindrischen Einzelmagnete 22, 23 sind mit gleichen Polen, hier mit den Nordpolen, einander zugekehrt.

Die Magnete, hier die Einzelmagnete 22, 23, sind gegenüber mechanischen und/oder chemischen Beeinträchtigungen geschützt. Insbesondere sind die Einzelmagnete 22, 23 gegen aggressive Medien, wie Leim in der Verpackungstechnik, geschützt. Dieser Schutz wird durch eine Abdeckung und/oder Beschichtung mindestens im Bereich von einander zugekehrten Magnetflächen 33 bewirkt.

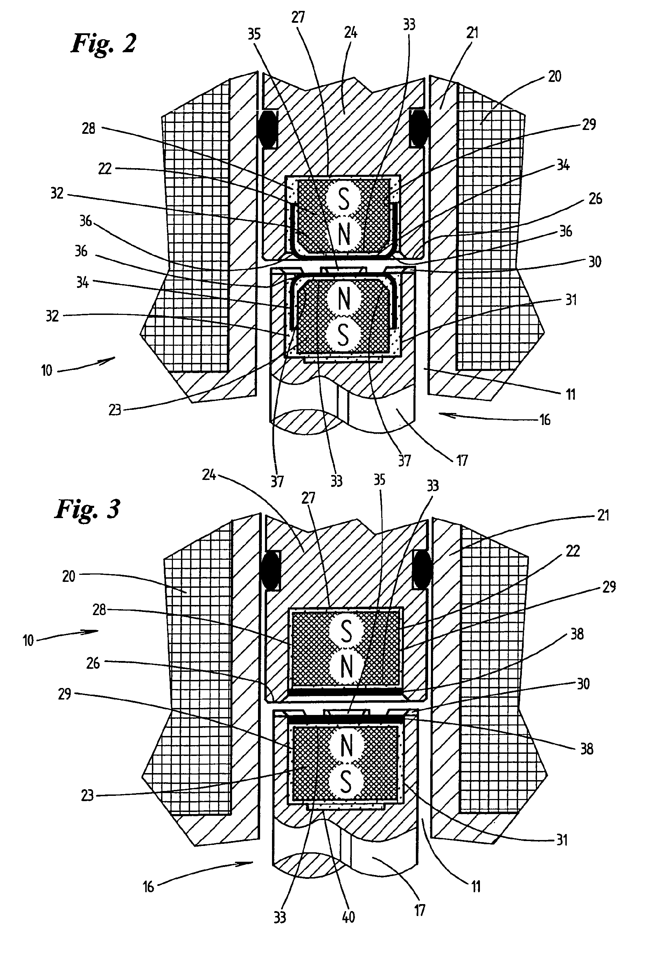

Bei dem Ausführungsbeispiel gemäß Fig. 2 ist die Magnetfläche 33 und ein angrenzender Bereich der Seitenfläche 29 des Einzelmagneten 22, 23 mit einer kappenförmigen Abdeckung 34 versehen. Besonders vorteilhaft ist eine Abdeckung 34 aus Metall, insbesondere Titan. Dieser Werkstoff kann bei einer sehr dünnen Wandstärke (z. B. etwa 0,05 mm) verarbeitet werden. Überraschenderweise hat dieser Werkstoff schwachmagnetische Eigenschaften und verstärkt die Kraftlinien der Einzelmagnete 22, 23. Die Abdeckung 34 bzw. Titankappe ist vorzugsweise mittels Kleber an dem Einzelmagneten 22 oder 23 befestigt, vorliegend durch den Kleber 28, 32 zum Fixieren des Magneten 22, 23. Die Anordnung ist so getroffen, dass im Bereich des Tragstücks 24 die Abdeckung 34 bündig liegt mit der Endfläche 26 des Tragstücks 24.

Auch gegenüberliegend im Bereich des Einzelmagneten 23 ist die Abdeckung 34 bündig mit der Stützfläche 30. In diesem Bereich sind jedoch einzelne, ringsherum angeordnete Stege 35 vorgesehen, die über die Stützfläche 30 bzw. über den Einzelmagneten 23 und über die Abdeckung 34 hinwegragen und in der oberen Endstellung des Betätigungsorgans 16 Anlage erhalten an der Endfläche 26, um einen unmittelbaren Kontakt der Einzelmagnete 22, 23 bzw. der Abdeckungen 34 in der oberen Endstellung zu vermeiden. Zur Anpassung an die Kontur der Abdeckung 34 mit einer Rundkante 36 sind die Einzelmagnete 22, 23 im Bereich der Magnetfläche 33 mit einer Abschrägung bzw. Phase 37 versehen.

Das Ausführungsbeispiel gemäß Fig. 3 unterscheidet sich von dem voranstehend beschriebenen durch die Schutzmaßnahme für den bzw. die Einzelmagnete 22 ,23. Diese sind im Bereich der Magnetflächen 33 mit einer Deckplatte 38 versehen, die sich über den vollen Querschnitt der Ausnehmung 27, 31 erstreckt. Die Deckplatte 38 ist vorzugsweise durch den Kleber 28, 32 fixiert bzw. mit der Magnetfläche 33 verbunden. Die Deckplatte 38 besteht vorzugsweise aus Titan, geeignet sind aber auch andere Metalle oder Kunststoff. Die Deckplatten 38 sind jeweils zurückgesetzt gegenüber den Endflächen 26 bzw. den Stegen 35, sodass ein wechselseitiger Kontakt vermieden wird. Die Deckplatten 38 sind passend in die Ausnehmung bzw. Vertiefung 27 bzw. 31 eingesetzt, sodass der Bereich der Magnete abgedichtet ist.

Statt gesonderter Abdeckmittel für die Magnete 22, 23 können diese bei der Fertigung der Magnete oder nach dem Einsetzen in die erforderliche Stellung innerhalb des Ventils mit einer Schutzschicht 39 versehen werden. Auch diese hat die Eigenschaft, die Magnete 22, 23 zu schützen, deren Wirkung aber nicht zu beeinträchtigen. Die Schutzschicht 39 besteht vorzugsweise aus einer Substanz, die beim Anbringen formbar ist und danach dauerhaft aushärtet. Beispielsweise kann die Schutzschicht 39 aus Kunststoff (Polyester) bestehen.

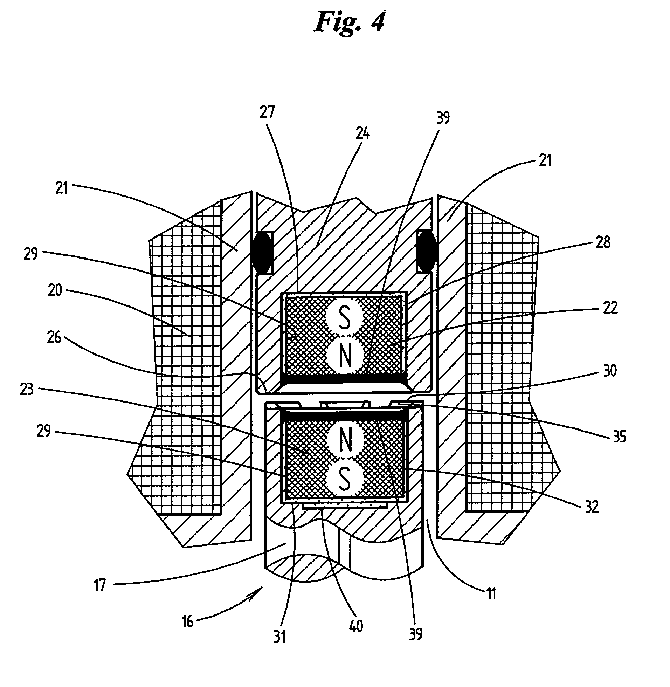

Bei dem Ausführungsbeispiel gemäß Fig. 4 erstreckt sich die Schutzschicht 39 über den gesamten Mündungsbereich der Ausnehmung 27 bzw. 31. Die Schutzschicht 39 schließt demnach an die die Ausnehmung 27, 31 umgebende Fläche dichtend an. Alternativ kann sich die Schutzschicht 39 zusätzlich im Bereich der Seitenflächen 29 der Magnete erstrecken oder diese vollständig umgeben.

Bei der Montage der Einzelmagnete 22, 23 wird vorzugsweise so verfahren, dass die betreffenden Flächen der Magnete 22, 23 mit der verbindenden Beschichtung, also dem Kleber 28, 32 versehen und sodann in die betreffende Ausnehmung 27, 31 eingesetzt werden. Danach wird die Abdeckung 34, die Deckplatte 38 oder die Schutzschicht 39 angebracht. Bei Verwendung einer Abdeckung 34 oder Schutzschicht 39 kann diese auch vor Einsetzen des Magneten 22, 23 in die zugeordnete Ausnehmung 27, 31 an den Magneten angebracht werden.

In der Ausnehmung 27, 31, nämlich im Bereich einer Bodenfläche, ist eine Vertiefung 40 eingeformt, in die eine Überschlussmenge an Kleber 28, 32 beim Einsetzen des Magneten 22, 23 eintreten kann.

**Bezugszeichenliste**

| | | | |
|---|---|---|---|
| 10 | Ventilgehäuse | 39 | Schutzschicht |
| 11 | Ventilkammer | 40 | Vertiefung |
| 12 | Leimkanal | | |
| 13 | Ventilöffnung | | |
| 14 | Ventilsitz | | |
| 15 | Sitzfläche | | |
| 16 | Verschlussorgan | | |
| 17 | Kolbenstück | | |
| 18 | Zwischenstück | | |
| 19 | Schließstück | | |
| 20 | Elektromagnet | | |
| 21 | Haltestück | | |
| 22 | Einzelmagnet | | |
| 23 | Einzelmagnet | | |
| 24 | Tragstück | | |
| 25 | Stellschraube | | |
| 26 | Endfläche | | |
| 27 | Ausnehmung | | |
| 28 | Kleber | | |
| 29 | Seitenfläche | | |
| 30 | Stützfläche | | |
| 31 | Ausnehmung | | |
| 32 | Kleber | | |
| 33 | Magnetfläche | | |
| 34 | Abdeckung | | |
| 35 | Steg | | |
| 36 | Rundkante | | |
| 37 | Phase | | |
| 38 | Deckplatte | | |

## Patentansprüche

1. Dosierventil für strömende Medien, insbesondere Leimdüse bzw. Leimventil, mit einem Regel- oder Verschlussorgan (16), welches durch zwei Magneten (22, 23), insbesondere durch zwei Dauermagneten, verstellbar ist, wobei:
- ein Magnet (22) feststehend und gleichpolig gegenüberliegend dem anderen Magneten (23) der mit dem Regel- oder Verschlussorgan (16) verbunden ist, vorgesehen ist und durch einen taktweise betätigbaren Elektromagneten (20) das Regel- oder Verschlussorgan (16) gegen die Wirkung der Magneten (22, 23) in eine Öffnungsstellung bringbar ist, und
- jeder der beiden Magneten (22, 23) in einer Ausnehmung (27, 31) eines jeweiligen Magnetträgers (17, 24) angeordnet ist,
**dadurch gekennzeichnet, dass**
- die beiden Magneten (22, 23) mindestens teilweise mit einer gegen Einwirkungen des Mediums resistenten, die Magnetkraft nicht beeinträchtigenden und der offenen Seite der Ausnehmung (27, 31) zugewandten Beschichtung (39) oder Abdeckung (34) oder Deckplatte (38) versehen sind, und
- jeder der beiden Magneten (22, 23) mindestens im Bereich von Seitenflächen (29) mit einer Haftmasse bzw. einem Kleber versehen und dadurch in der jeweiligen Ausnehmung (27, 31) befestigt ist.

2. Ventil nach Anspruch 1, **dadurch gekennzeichnet, dass** die im Querschnitt runden oder eckigen Magneten (22, 23) mindestens im Bereich einer freien, dem Medium zugekehrten Endfläche bzw. Magnetfläche (33) mit der Abdeckung (34) oder der Deckplatte (38) oder der Beschichtung (39) versehen sind.

3. Ventil nach Anspruch 2, **dadurch gekennzeichnet, dass** die Abdeckung (34) oder die Deckplatte (38) aus Metall besteht, insbesondere aus Titan.

4. Ventil nach Anspruch 2, **dadurch gekennzeichnet, dass** die Abdeckung (34) als Kappe ausgebildet ist, die die freie Endfläche bzw. Magnetfläche (33) des Magneten (22, 23) und mindestens angrenzende Bereiche von Seitenflächen (29) abdeckt.

5. Ventil nach Anspruch 4, **dadurch gekennzeichnet, dass** die als Kappe ausgebildete Abdeckung (34) aus Titan eine Schicht- bzw. Wanddicke von vorzugsweise etwa 0,05 mm aufweist.

6. Ventil nach Anspruch 1 oder einem der weiteren Ansprüche, **dadurch gekennzeichnet, dass** die Abdeckung (34) oder die Deckplatte (38) durch Verbindungsmittel, insbesondere mittels Kleber am Magneten (22, 23) befestigt ist.

7. Ventil nach Anspruch 1 oder einem der weiteren Ansprüche, **dadurch gekennzeichnet, dass** die Beschichtung (39) auf den Magneten (22, 23) aus einem ursprünglich fließfähigen oder formbaren und am Magneten (22, 23) aushärtenden und haftenden Material, insbesondere aus Kunststoff (Polyester) oder Metall, aufgebracht ist.

8. Ventil nach Anspruch 1 oder einem der weiteren Ansprüche, **dadurch gekennzeichnet, dass** die Magneten (22, 23) in einer Ausnehmung (27, 31) des Magnetträgers (17, 24) mit einer passend in der Ausnehmung (27, 31) verankerten Deckplatte (38) versehen sind.

9. Ventil nach Anspruch 8, **dadurch gekennzeichnet, dass** die Magneten (22, 23) jeweils in der Ausnehmung (27, 31) des Magnetträgers (17, 24) auf einem Boden abgestützt sind, der eine Vertiefung (40) zur Aufnahme überschüssiger Verklebungs- oder Einbettungsmasse aufweist.

## Claims

1. A metering valve for flowing media, in particular a glue nozzle or glue valve, having a regulating or closure member (16) which can be adjusted by two magnets (22, 23), in particular by two permanent magnets, wherein:
- one magnet (22) is provided which is stationary and aligned with the same pole to the opposite other magnet (23), which is connected to the regulating or closure member (16), and by virtue of a cyclically operable electromagnet (20) the regulating or closure member (16) can be moved into an opening position counter to the action of the magnets (22, 23), and
- each of the two magnets (22, 23) is arranged in a recess (27, 31) of a respective magnet carrier (17, 24),
**characterized in that**
- the two magnets (22, 23) are provided, at least in part, with a coating (39) or covering (34) or cover plate (38) which is resistant to the effects of the medium, does not impair the magnetic force and faces the open side of the recess (27, 31), and
- each of the two magnets (22, 23) is provided, at least in the region of side surfaces (29), with an adhesive and thereby fastened in the respective recess (27, 31).

2. The valve as claimed in claim 1, **characterized in that** the cross-sectionally round or angular magnets (22, 23) are provided, at least in the region of a free end surface or magnetic surface (33) facing the medium, with the covering (34) or the covering plate (38) or the coating (39).

3. The valve as claimed in claim 2, **characterized in that** the covering (34) or the cover plate (38) consists of metal, in particular of titanium.

4. The valve as claimed in claim 2, **characterized in that** the covering (34) is designed as a cap which covers the free end surface or magnetic surface (33) of the magnet (22, 23) and at least adjacent regions of side surfaces (29).

5. The valve as claimed in claim 4, **characterized in that** the covering (34), designed as a cap and made of titanium, has a layer thickness or wall thickness of preferably approximately 0.05 mm.

6. The valve as claimed in claim 1 or one of the further claims, **characterized in that** the covering (34) or the cover plate (38) is fastened on the magnet (22, 23) by connecting means, in particular by means of adhesive.

7. The valve as claimed in claim 1 or one of the further claims, **characterized in that** the coating (39) applied to the magnet (22, 23) is made of an initially free-flowing or mouldable material which hardens on, and adheres to, the magnet (22, 23), in particular made of plastics material (polyester) or metal.

8. The valve as claimed in claim 1 or one of the further claims, **characterized in that** the magnets (22, 23) in a recess (27, 31) of the magnet carrier (17, 24) are provided with a cover plate (38) which has an anchor fit in the recess (27, 31).

9. The valve as claimed in claim 8, **characterized in that** the magnets (22, 23) in the respective recess (27, 31) of the magnet carrier (17, 24) are supported on a base which has a depression (40) for receiving excess adhesive-bonding or embedding compound.

## Revendications

1. Vanne de dosage pour des milieux coulants, en particulier buse à colle ou vanne à colle, avec un organe de réglage ou de fermeture (16), qui est réglable au moyen de deux aimants (22, 23), en particulier au moyen de deux aimants permanents, dans laquelle
- il est prévu un aimant (22) stationnaire et opposé par leurs pôles identiques à l'autre aimant (23) qui est relié à l'organe de réglage ou de fermeture (16) et l'organe de réglage ou de fermeture (16) peut être amené dans une position ouverte, contre l'action des aimants (22, 23), au moyen d'un électroaimant (20) actionnable en cadence, et
- chacun des deux aimants (22, 23) est disposé dans un creux (27, 31) d'un porte-aimant respectif (17, 24),
**caractérisée en ce que**
- les deux aimants (22, 23) sont munis au moins partiellement d'un revêtement (39) ou d'un recouvrement (34) ou d'une plaque de couverture (38) résistant à l'action du milieu, ne compromettant pas la force des aimants et tourné (e) vers le côté ouvert du creux (27, 31), et
- chacun des deux aimants (22, 23) est muni d'un agent adhésif ou d'une colle au moins dans la région des faces latérales (29) et est ainsi fixé dans le creux respectif (27, 31).

2. Vanne selon la revendication 1, **caractérisée en ce que** les aimants (22, 23) de section transversale ronde ou polygonale sont munis du recouvrement (34) ou de la plaque de couverture (38) ou du revêtement (39) au moins dans la région d'une face d'extrémité ou face d'aimant (33) libre tournée vers le milieu.

3. Vanne selon la revendication 2, **caractérisée en ce que** le recouvrement (34) ou la plaque de couverture (38) se compose de métal, en particulier de titane.

4. Vanne selon la revendication 2, **caractérisée en ce que** le recouvrement (34) est réalisé en forme de capuchon, qui recouvre la face d'extrémité ou face d'aimant libre (33) de l'aimant (22, 23) et au moins des zones adjacentes de faces latérales (29).

5. Vanne selon la revendication 4, **caractérisée en ce que** le recouvrement en titane (34) réalisé en forme de capuchon présente une épaisseur de couche ou de paroi de préférence d'environ 0,05 mm.

6. Vanne selon la revendication 1 ou l'une quelconque des autres revendications, **caractérisée en ce que** le recouvrement (34) ou la plaque de couverture (38) est fixée à l'aimant (22, 23) par des moyens de liaison, en particulier au moyen d'une colle.

7. Vanne selon la revendication 1 ou l'une quelconque des autres revendications, **caractérisée en ce que** le revêtement (39) est déposé sur l'aimant (22, 23) à partir d'un matériau initialement apte à couler ou à être moulé et durcissant et adhérant sur l'aimant (22, 23), en particulier en matière plastique (polyester) ou en métal.

8. Vanne selon la revendication 1 ou l'une quelconque des autres revendications, **caractérisée en ce que** les aimants (22, 23) dans un creux (27, 31) du porte-aimant (17, 24) sont munis d'une plaque de couverture (38) ancrée de façon ajustée dans le creux (27, 31).

9. Vanne selon la revendication 8, **caractérisée en ce que** les aimants (22, 23) sont appuyés dans le creux (27, 31) du porte-aimant (17, 24) sur un fond, qui présente une cavité (40) destinée à contenir l'excédent de masse de collage ou d'enrobage.
